# EUROPÄISCHE PATENTANMELDUNG

(11) **EP 1 075 121 A2**
(43) Veröffentlichungstag der Anmeldung: **07.02.2001**
(21) Anmeldenummer: 00114483.1
(22) Anmeldetag: 06.07.2000
(51) Int. Cl.: H04L 25/02

(54) **Schnittstellenanpassung**

(30) Priorität: 31.07.1999 DE 19936113
(71) Anmelder: Tenovis GmbH & Co. KG, 60227 Frankfurt (DE)
(72) Erfinder: Friedrich, Klaus-Georg, 61130 Niedderau-Heldenbergen (DE)
(74) Vertreter: Friedmann, Jürgen, Dr.-Ing.

(57) **Zusammenfassung**

Für eine Schnittstellenanpassung sind auswählbare Adapterbaugruppen (2, 3, 4) übertragungsmediumsspezifisch ausgebildet. Über eine Erkennungseinrichtung (5) können die Adapterbaugruppen (2, 3, 4) bei Kontakt mit einer Hauptbaugruppe (1) erkannt werden. In Abhängigkeit der erkannten Adapterbaugruppe (2, 3, 4) ist über eine Konfigurierungseinrichtung (6) die Schnittstelle automatisch übertragungsmediumsspezifisch konfigurierbar.

## Beschreibung

### Stand der Technik

Die Erfindung geht aus von einer Schnittstellenanpassung mit einer Hauptbaugruppe und mit mindestens einer auswählbaren Adapterbaugruppe.

Aus der DE 40 23 872 A1 ist eine Anordnung zum Verbinden unterschiedlicher Datenschnittstellen bekannt. Dort ist zwischen den Datenschnittstellen und einer Datenkanalsteuerung ein Multiplexer vorgesehen, der in Abhängigkeit einer Betriebsarteneinstellung steuerbar ist. Die Betriebsarteneinstellung erfolgt dort in Abhängigkeit von Codierschaltern.

### Vorteile der Erfindung

Mit den Maßnahmen gemäß den Merkmalen des Anspruchs 1 ist eine Konfigurierung einer Schnittstelle für auswählbare Übertragungsmedien möglich, ohne daß eine manuelle Einstellung notwendig ist. Eine manuelle Einstellung über Betriebsartenschalter wie etwa in vorgenannter DE 40 23 872 A1 entfällt. Durch die fehlende manuelle Konfiguration ergeben sich weniger Fehlermöglichkeiten. Außerdem verringern sich die Einrichtzeiten. Die Konfigurierung erfolgt über eine Erkennungseinrichtung, die bei Kontakt einer Adapterbaugruppe mit der Hauptbaugruppe automatisch die Art der übertragungsmediumsspezifischen Adapterbaugruppe erkennt und eine Konfigurierungseinrichtung entsprechend steuert.

Werden die Adapterbaugruppen je nach Übertragungsmedium unterschiedlich pincodiert, kann die Erkennungseinheit diese Pincodierung auf einfache Weise auswerten und die Konfigurierungseinrichtung entsprechend steuern.

Erkennungs- und Konfigurierungseinrichtung können in vorteilhafter Weise Bestandteil der Hauptbaugruppe sein. Damit ist ein Mehraufwand in den auswählbaren Adapterbaugruppen nicht notwendig und die Hardware in der Hauptbaugruppe kann für unterschiedliche Adapterbaugruppen verwendet werden.

Mit den Maßnahmen der Erfindung können insbesondere ISDN-Basic-Rate-Schnittstellen für unterschiedliche Übertragungsmedien wie 120-Ω-Symmetrische-Kabel, 75-Ω-Koaxial-Kabel oder Lichtwellenleiter realisiert werden, ohne daß manuelle Eingriffe vorgenommen werden müssen.

Die Konfigurierungseinrichtung nach der Erfindung kann auch für den richtungsorientierten Betrieb eingerichtet sein, z.B. automatische Umschaltung von Sende- und Empfangsbetrieb.

Über die Konfigurierungseinrichtung können Schaltbrücken und/oder Anpaßelemente wie Impedanztransformationsnetzwerke, Anpaßtransformatoren und/oder Abschlußimpedanzen automatisch aktiviert werden entsprechend der Art der gesteckten übertragungsmediumsspezifischen Adapterbaugruppen.

### Zeichnungen

Anhand der Zeichnungen werden Ausführungsbeispiele der Erfindung näher erläutert. Es zeigen
Figur 1 ein Blockschaltbild einer Schnittstellenanpassung,
Figur 2 eine Ausgestaltung für die Konfigurationseinrichtung.

### Beschreibung von Ausführungsbeispielen

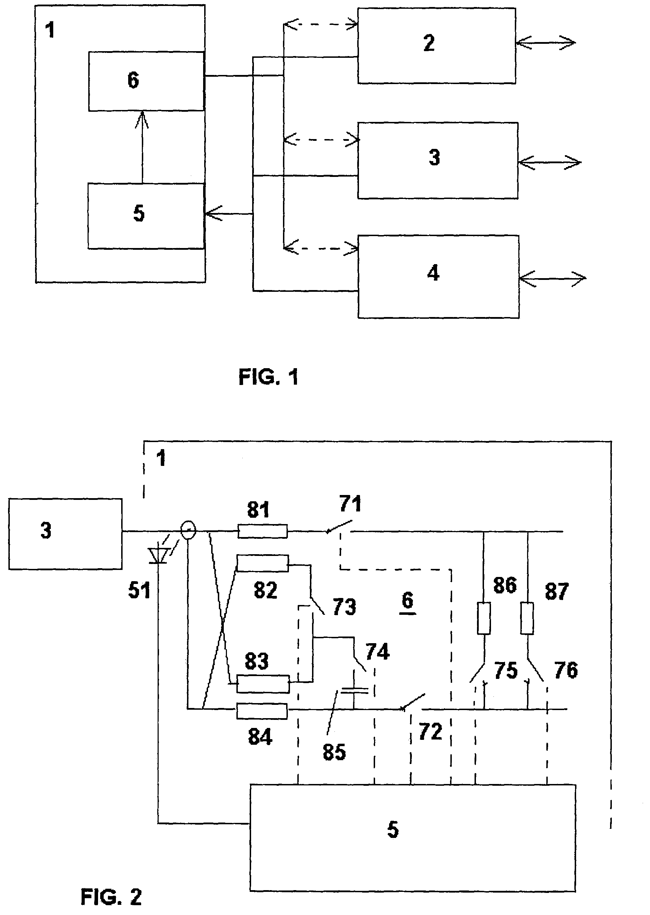

Wie Figur 1 zeigt, besteht die Schnitstellenanpassung nach der Erfindung aus einer Hauptbaugruppe 1 und auswählbaren übertragungsmediumsspezifisch ausgebildeten Adapterbaugruppen 2, 3 und 4 für unterschiedliche Übertragungsmedien, z.B. für ein symmetrisches 120-Ω-Kabel -Adapterbaugruppe 2-, ein unsymmetrisches 75-Ω-Koaxial-Kabel -Adapterbaugruppe 3- oder einen Lichtwellenleiter - Adapterbaugruppe 4. Es ist eine Erkennungseinrichtung 5 vorzugsweise als Bestandteil der Hauptbaugruppe 1 vorgesehen, die bei Kontakt mit mindestens einer der auswählbaren Adapterbaugruppen 2, 3 und/oder 4 die Art der übertragungsmediumsspezifischen Adapterbaugruppen 2, 3 und/oder 4 erkennen kann. Zur Erkennung der jeweiligen Adapterbaugruppe 2, 3 bzw. 4 kann beispielsweise deren Pincodierung ausgewertet, d.h. je nach Art der übertragungsmediumsspezifischen Adapterbaugruppe kommen andere Steckerstifte mit entsprechenden Steckerbuchsen der Hauptbaugruppe 1 in Kontakt, was von der Erkennungseinrichtung 5 detektiert und ausgewertet wird. Die Erkennungseinrichtung 5 kann hierzu entsprechende Sensoren 51 elektrischer, optischer und/oder mechanischer aufweisen. Anstelle einer Pincodierung können auch unterschiedliche Kontaktbuchsen an der Hauptbaugruppe 1 vorgesehen sein, in die jeweils nur eine Art von Adapterbaugruppen gesteckt werden können. Je nachdem, bzw. wo nun eine solche Adapterbaugruppe gesteckt wird, spricht die Erkennungseinrichtung 5 an und steuert eine Konfigurierungseinrichtung 6, die vorzugsweise auch Bestandteil der Hauptbaugruppe 1 ist. Die Konfigurierungseinrichtung 6 besteht beispielsweise aus Schaltbrücken oder -strecken 71, 72, 73 ... , die über elektronische Schalter (Transistoren etc.) oder elektromechanische Schalter (Relais) je nach Ergebnis der von der Erkennungseinrichtung 5 erkannten gesteckten Adapterbaugruppen aktivierbar sind. Über die Schaltbrücken oder -strecken 71, 72, 73, ... gemäß Figur 2 werden die Schaltungselemente 81, 82, 83, ... so miteinander verbunden, wie es für eine Schnittstellenanpassung des ausgewählten Übertragungsmediums an die Funktionseinheiten der Hauptbaugruppe 1 oder ihr nachgeschalteter Baugruppen notwendig ist.

Die Erkennungseinrichtung 5 kann auch verschiedene Speicherbereiche aufweisen, die je nach den Signalen an den Sensoren 51 angesteuert werden und entsprechende Schaltsignale für die Schaltbrücken oder -strecken 71, 72, 73, ... ausgeben.

Das in Figur 2 gezeigte Ausführungsbeispiel für die Konfigurierungseinrichtung 6 zeigt eine Balun-Schaltung, die entweder nur eine einfache Impedanztransformation mit entsprechenden Abschlußimpedanzen durchführt oder mit anderer Aktivierung der Schaltbrücken oder -strecken 71, 72, 73, ... durch die Erkennungseinrichtung 5 zur Symmetrierung, insbesondere von einem unsymmetrischen Ausgang der Adapterbaugruppe 3, auf eine symmetrische Signalverarbeitung innerhalb der Hauptbaugruppe 1 dient. Natürlich kann diese Symmetrierungsfunktion ganz oder teilweise in die Adapterbaugruppe 3 verlagert werden. In diesem Fall würde der Konfigurationseinrichtung innerhalb der Hauptbaugruppe 1 nur die Aufgabe der Impedanzanpassung zukommen. Ebenso kann die elektro-optische Wandlung vollständig in der Adapterbaugruppe 4 realisiert sein und die Konfigurierungseinrichtung 6 wie zuvor nur die Impedanzanpassung vornehmen.

Die Konfigurierungseinrichtung 6 kann auch zu einem richtungsorientierten Betrieb der Schnittstelle eingerichtet sein. D.h. je nach eingesteckter Adapterbaugruppe kann z.B. in Senderichtung eine Aufwärtsimpedanz-Transformation erfolgen und in Empfangsrichtung beispielsweise eine Abwärtsimpedanz-Transformation.

Die Schnittstellenanpassung nach der Erfindung kann als ISDN-Basic-Rate oder Primary-Schnittstelle ausgebildet sein.

## Patentansprüche

1. Schnittstellenanpassung mit einer Hauptbaugruppe (1) und mindestens einer auswählbaren Adapterbaugruppe (2, 3, 4) mit folgenden Merkmalen:
- die mindestens eine auswählbare Adapterbaugruppe (2, 3, 4) ist übertragungsmediumsspezifisch ausgebildet,
- eine Erkennungseinrichtung (5) ist dazu eingerichtet, bei Kontakt der mindestens einen auswählbaren Adapterbaugruppe (2, 3, 4) mit der Hauptbaugruppe (1) die Art der übertragungsmediumsspezifischen Adapterbaugruppe (2, 3, 4) zu erkennen,
- eine Konfigurierungseinrichtung (6) ist von der Erkennungseinrichtung (5) derart steuerbar, daß aufgrund der erkannten Art der übertragungsmediumsspezifischen Adapterbaugruppe (2, 3, 4) eine Konfigurierung einer Schnittstelle entsprechend dem Übertragungsmedium erzielbar ist.

2. Schnittstellenanpassung nach Anspruch 1, dadurch gekennzeichnet, daß die auswählbaren Adapterbaugruppen (2, 3, 4) je nach dem Übertragungsmedium für das sie einsetzbar sind unterschiedlich pincodiert sind und die Erkennungseinrichtung (5) ausgebildet ist, auf die unterschiedliche übertragungsmediumsspezifische Pincodierung anzusprechen.

3. Schnittstellenanpassung nach Anspruch 1 oder 2, dadurch gekennzeichnet, daß die Erkennungseinrichtung (5) Bestandteil der Hauptbaugruppe (1) ist.

4. Schnittstellenanpassung nach einem der Ansprüche 1 bis 3, dadurch gekennzeichnet, daß die Konfigurierungseinrichtung (6) Bestandteil der Hauptbaugruppe (1) ist.

5. Schnittstellenanpassung nach einem der Ansprüche 1 bis 4, dadurch gekennzeichnet, daß die Schnittstelle als ISDN-Basic-Rate- oder Primary-Schnittstelle konfigurierbar ist, an die über eine Adapterbaugruppe (2, 3, 4) als Übertragungsmedium ein 120-Ω-Symmetrisches-Kabel, ein 75-Ω-Koaxial-Kabel oder ein Lichtwellenleiter anschließbar ist.

6. Schnittstellenanpassung nach einem der Ansprüche 1 bis 5, dadurch gekennzeichnet, daß die Konfigurierungseinrichtung (6) zu einem richtungsorientierten Betrieb der Schnittstelle eingerichtet ist.

7. Schnittstellenanpassung nach einem der Ansprüche 1 bis 6, dadurch gekennzeichnet, daß die Konfigurierungseinrichtung (6) Schaltbrücken (71, 72, 73 ... ) und/oder Anpaßelemente (81, 82, 83 ... ) der Hauptbaugruppe (1) entsprechend der Art der gesteckten übertragungsmediumsspezifischen Adapterbaugruppe (2, 3, 4) aktiviert.

8. Schnittstellenanpassung nach Anspruch 7, dadurch gekennzeichnet, daß als Anpaßelemente (81, 82, 83 ... ) Impedanztransformationsnetzwerke, Anpaßtransformatoren und/oder Abschlußimpedanzen vorgesehen sind.
